Europäisches Patentamt

European Patent Office

Office européen des brevets

(19)

(11) Publication number: **0 050 756**
**A1**

(12) **EUROPEAN PATENT APPLICATION**

(21) Application number: **81107948.2**

(22) Date of filing: **06.10.81**

(51) Int. Cl.³: **F 16 K 11/24**

(30) Priority: **25.10.80 DE 8028467 U**

(43) Date of publication of application:
**05.05.82 Bulletin 82/18**

(84) Designated Contracting States:
**FR GB IT**

(71) Applicant: **EATON S.A.M.**
**14 Boulevard du Bord de Mer Boite Postale 84**
**Monaco(MC)**

(72) Inventor: **Cremers, Michel**
**Villa La Chaumiere Avenue General de Gaulle Gorbio**
**F-06500 Menton(FR)**

(74) Representative: **Patentanwälte Dipl.-Ing. W.**
**Scherrmann Dr.-Ing. R. Rüger**
**Webergasse 3 Postfach 348**
**D-7300 Esslingen (Neckar)(DE)**

(54) Electrically operated diaphragm valve.

(57) An electrically operated diaphragm valve (1), especially for use with washing machines, comprises a housing (2) made of plastic and enclosing a diaphragm or membrane (9) and a valve seat (8) cooperating therewith. An armature guide (13) is welded by means of ultrasonic to the housing part defining a water outlet (4) and a ferromagnetic armature (16) is shiftable mounted within the armature guide. A magnetic coil provided with a ferromagnetic yoke (28) or return path is located on the armature guide. The magnetic yoke (28) is comprising two congruent L-shaped parts (31a, 31b), one leg (shank) (32a, 32b) of each of said parts being provided with a tube (27, 28) and that the tubes (26, 27) of both legs (32a, 32b) are reaching into the magnetic coil (19) - which concentrically surrounds the armature guide (13) - from opposing sides and that they define the air gap (29); and that the free ends of the legs (34a, 37a) of one (31a) of said parts are abutting the free leg ends (34b, 37b) of the other part (31b).

Fig. 1

**0050756**

Patentanwälte Dipl.-Ing. W. Scherrmann Dr.-Ing. R. Rüger

7300 Essiingen (Neckar) Webergasse 3 Posttach 348

5th October, 1981
Gm 2 EUrüeh

Telefon
Stuttgart (07 11). 35 65 39
35 96 19
Telex    07 256610 smru
Telegramme Patenischutz
Essingenneckar

- 1 -

Eaton S.a.M., Monaco, MC

## Electrically Operated Diaphragm Valve

This invention concerns an electrically operated diaphragm valve, especially for use with washing machines, comprising a housing - made of plastic - that encloses a diaphragm and a valve seat cooperating therewith, and that is provided with a water inlet as well as with a water outlet that is in communication with the valve seat and to which is welded, by means of ultrasonic, an armature guide which tightly holds the membrane (diaphragm) in the housing; and which is also provided with a ferromagnetic armature which is biased in the direction of the diaphragm and which is movable in the longitudinal direction; plus a magnetic coil that is placed outside and concentrically on the armature guide and is clamped inplace by means of a snap connection; which magnetic coil has, extending a right angles to its axis, electrical contacts which are partially enclosed by a ferromagnetic yoke defining an internal air gap in the region of the armature.

The industry is familiar with such a valve whose magnetic coil, however, is expensive to produce.

DE-OS 2 800 204 describes an electrically operated diaphragm valve whose magnetic yoke comprises two tube sections, each provided with a flange, which can be introduced into the coil form of the magnetic coil from opposite sides. Thereupon, the winding is placed on the coil form and over this coil form is slid a C-shaped ferromagnetic profile-piece so that the tube sections, which define an air gap inside the magnetic coil, are magnetically connected. Subsequently, the magnetic coil which is now provided with a magnetic return path (yoke) is embedded in plastic material. In the case of this well known diaphragm valve, high accuracy requirements are demanded in respect to the C-shaped profile and the axial distance of the flanges of the two tube sections, in order to ensure that neither the C-shaped profile-piece becomes widened when it is slid on – and thus causing a wedge shaped additional air gap – nor that the inside width of the C-shaped profile-piece becomes larger than the distance between the flanges,which would also result in an additional air gap.

The invention has the objective of yielding an electrically operated diaphragm valve that can be mass produced as a cost effective and rugged product and whose magnetic return path for the sealed magnetic coil can be subsequently assembled, thereby making only modest demands in respect to mechanical tolerances while a low magnetic resistance is maintained.

To solve this problem the electrically operated diaphragm valve of the invention was created whose characteristics are given in patent claim 1.

Since the magnetic return path (yoke) comprises two congruent parts, bent in L-shape, the manufacture of the individual parts is simplified. Furthermore, since a tube is attached to
each part, it is possible to assemble the yoke
with the already sealed magnetic coil, the tubes
fitted into the armature bore holding the magnetic
yoke on the magnetic coil.

If the abutting leg ends of the two parts are
adapted to be interlocked with each other a very
rigid structure will result, especially since the
parts will also be positively held together in a
locked position in the axial direction. Very simple
conditions are obtained when one leg end of one
part is provided with a protrusion and the corresponding other leg end of the other part is provided with a corresponding and matching recess. In
that case, the protrusion and recess can be so
shaped that they yield a mechanically rigid dovetail connection.

Furthermore, it is possible that both parts of
the magnetic return path (yoke) are held together by means of the armature guide of the
diaphragm valve.

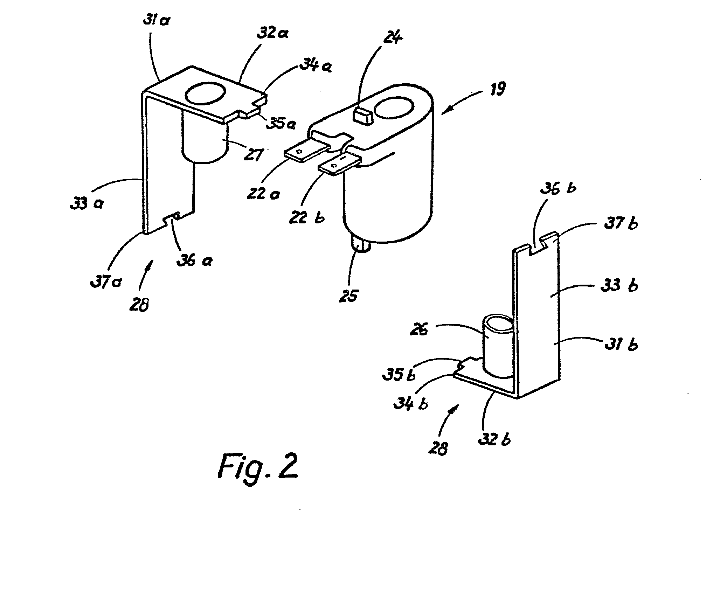

The drawings depict an embodiment of the subject
matter of this invention. Shown are:
        In Figure 1 an electrically operated
        diaphragm valve persuant to this invention,
        in a longitudinal sectional view and in
        Figure 2 the magnetic coil as well as both
        parts of the magnetic yoke for the diaphragm
        valve shown in Figure 1, in a perspective
        explosive view.

The electrically operated diaphragm valve 1 comprises a housing 2 made of plastic material integral with a water inlet 3 as well as with a water outlet 4. The water inlet 3 is in the form a threaded fitting that encloses an internal water screen 5 als well as a choke port 6. By means of a flange 7 that·is slid on the water inlet 3, the diaphragm valve 1 can be attached to a washing machine.

The water outlet 4 is in the form of a nipple and is in communication, in the interior of the housing 2, with a valve seat 8 that is upwardly directed and on which rests a circular membrane 9 that is attached to the housing 2. In this membrane 9 a concentrical membrane-plate 10 is provided which has a concentrical bore 11. Laterally adjoining the valve seat 8, the membrane 9 is provided with a compensating bore 12 which also passes through the membrane-plate 10.

Above the membrane 9, there is located, within the housing 2, an armature guide 13, comprising a somewhat disk-shaped section 14 as well as a tube-shaped section 15 that is concentrically located relative to section 14. The upper end of this section 15, that is opposite the disk-shaped section 14, is sealed off. The armature guide 13 firmly clamps the membrane 9 to the housing 2. It is attached to the housing 2 by ultrasonic or rotary friction welding. In the armature guide 13 a ferromagnetic armature 16 is provided which can be shifted longitudinally, and which carries on its front end an elastic closure member 17 by which means the bore 11 in the membrane-plate 10 can be sealed. By means of a spring 18 provided inside the armature guide 13, the armature 16 is biased in the direction towards the membrane 9.

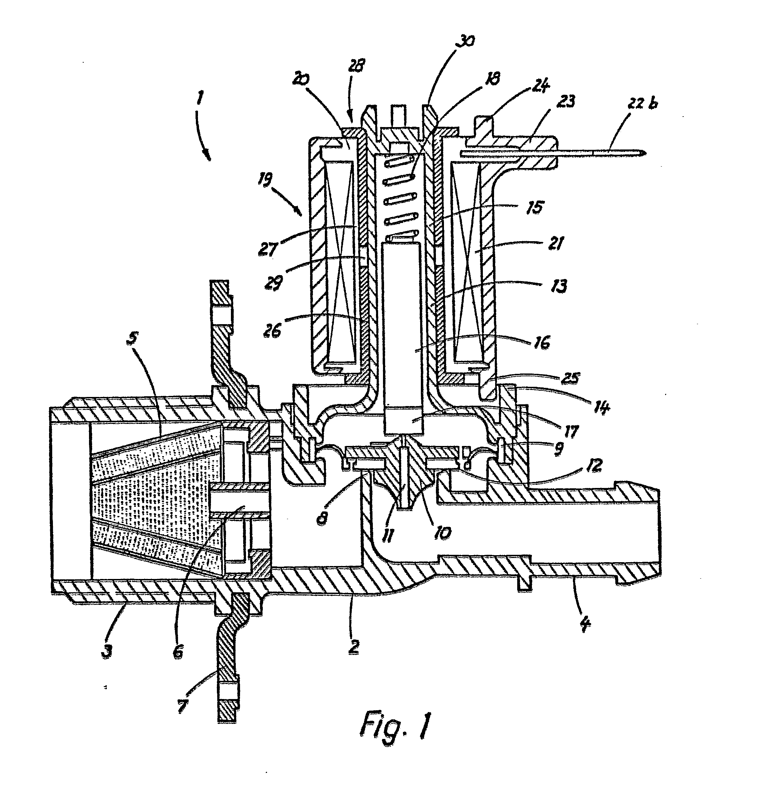

On the outside of the tube-shaped section 15 of the armature guide 13, a magnetic coil 19 is located which is provided with a wire winding 21 supported by a coil form (spool) 20. In the core form 20 two plugs, 22a and 22b are provided, extending roughly radially in respect to the magnetic coil 19. In the sectional view of Figure 1, only plug 22b is visible. The winding 21 and the coil form 20 are encased in a plastic (sealing) material 23; on the ends of the magnetic coil protrusions 24 and 25 are formed by the sealing material; one of these protrusions is engaging a corresponding recess in the disk-shaped section 14 of the armature guide 13, thus fixing the magnetic coil 19 unrotatably in respect to the housing 2 of the diaphragm valve.

Between the inner surface of the magnetic coil 19, which is concentrically supported on the armature guide 13, and the outer surface of the tube-shaped section 15 are located two tubes 26 and 27 of a magnetic return path or yoke 28. These tubes define, in the region of the armature 16, an air-gap 29 which is the operational air-gap of the diaphragm valve.

The magnetic coil 19, assembled with the associated magnetic yoke 28, is secured to the tube section 15 by means of clamping fingers 30 which are provided on the top end of the armature guide 13 and are facing outwardly therefrom.

The magnetic yoke 28 comprises two parts 31a and 31b, each bent in L-shape. Each of these L-shaped parts 31a and 31b is supporting on one leg 32a, respectively 32b, the tube 26, respectively 27, which extends in the direction of the other leg 33a, respectively 33b, and which - when the valve is assembled such as depicted in Figure 1 - is mounted on the tube-shaped section 15.

The leg 32a, respectively 32b, which carries the tube 26, respectively 27, is provided along its free leg end 34a, respectively 34b, with a protrusion 35a, respectively 35b, which fits into a corresponding recess 36a, respectively 36b, of the free end of the leg 37a, respectively 37b, of the leg 33a, respectively 33b. The protrusion 35a, respectively 35b, forms together with the recess 36a, respectively 36b, a dovetail juntion which effectively prevents an axial disengagement of the parts 31a and 32b.

In manufacturing the valve, the coil 21 is first wound onto the coil form 20 and subsequently the preassembled magnetic coil 19 is encased or sealed in the coating envelope 23. Thereupon, the tubes 26 and 27 of the parts 31a and 31b of the magnetic yoke 28 are inserted into the magnetic coil 19 while the legs 33a and 33b are sumultaneously slightly urged outwardly so that the recess 36b of the free end of leg 37 can slide over the protrusion 35a of the free end of leg 34 and, on the opposite front side of the magnetic coil, the recess 36a can slide over the protrusion 34b. As soon as the legs 33a and 33b are released, the recesses 36a and 36b slide onto the associated protrusions 35a and 35b. The thus assembled magnetic coil 19 with the magnetic yoke 28 is placed onto the tube section 15 of the armature guide and held by means of the clamping fingers 30.

Instead of securing the two parts 31a and 31b of the magnetic yoke 28 to each other by means of a dovetail connection, it is also possible to hold them together by means of the securing means, such as the clamping fingers 30 and the disk-shaped section 14, effective between the magnetic coil and the tube section 15.

Because of the symmetrical design of the two end sides of the magnetic coil 19 it is possible to mount the coil on the armature guide 13 with the plugs on top or on the bottom, whichever is preferred.

When during the operation of the diaphragm valve 1 the magnetic coil 19 is deenergized, the spring 18 will press the armature 16 onto the bore 11 in the membrane-plate 10 so that on the topside of the membrane 9 - through the compensating bore 12 - a pressure will build up which will press the membrane 9, together with the membrane-plate 10, onto the valve seat 8. When the magnetic coil 19 is energized, the armature 16 will be lifted against the bias of spring 18 so that the pressure now acting on membrane 9 will be reduced through bore 19 and the input pressure of the water will lift the membrane off the valve seat 8 and the water can flow into the washing machine via the water inlet 3 and the water outlet 4.

Claims:

1. Electrically operated diaphragm valve, especially for use with washing machines, comprising a housing - made of plastic - that encloses a diaphragm and a valve seat cooperating therewith; and that is provided with a water inlet as well as with a water outlet that is in communication with the valve seat and to which is welded, by means of ultrasonic, an armature guide which tightly holds the membrane (diaphragm) in the housing; and which is also provided with a ferromagnetic armature which is biased in the direction of the diaphragm and which is movable in the longitudinal direction; plus a magnetic coil that is placed outside and concentrically on the armature guide and is clamped inplace by means of a snap connection; which magnetic coil has, extending at right angles to its axis, electrical contacts which are partially enclosed by a ferromagnetic yoke defining an internal air gap in the region of the armature , characterized in that the magnetic yoke (28) is comprising two congruent L-shaped parts (31a, 31b), one leg (shank) (32a, 32b) of each of said parts being provided with a tube (27, 28) and that the tubes (26, 27) of both legs (32a, 32b) are reaching into the magnetic coil (19) - which concentrically surrounds the armature guide (13)- from opposing sides and that they define the air gap (29); and that the free ends of the legs (34a, 37a) of one (31a) of said parts are abutting the free leg ends (34b, 37b) of the other part (31b) so that the magnetic resistance is minimized.

**0050756**

2. Valve in accordance with claim 1, characterized in that the abutting leg ends (34a, 37b, 34b, 37a) of said two parts (31a, 31b) are interlocked with each other.

3. Valve in accordance with claim 2, characterized in that similar leg ends (37a, 37b) of said two parts (31a, 31b) are provided with recesses (36a, 36b) and that protrusions (35a, 35b) on the other leg ends (34a, 34b) of said parts are fitted into said recesses.

4. Valve in accordance with claim 3, characterized in that the recesses (36a, 36b) and the protrusions (35a, 35b) are forming dovetail junctions.

5. Valve in accordance with claim 1, characterized in that the two parts (31a, 31b) are held together by the armature guide (13) within the magnetic coil (19).

Fig. 1

0050756

2/2

*Fig. 2*

## DOCUMENTS CONSIDERED TO BE RELEVANT

| Category | Citation of document with indication, where appropriate, of relevant passages | Relevant to claim |
|---|---|---|
| | US - A - 3 062 992 (R.R. DAHL)<br>* Totality *<br>-- | 1,2,5 |
| | US - A - 3 872 878 (J.A. KOZEL)<br>* Totality *<br>-- | 1,2,3,<br>4,5 |
| | GB - A - 1 019 802 (PARKER-HANNIFIN CORPORATION)<br>* Totality *<br>-- | 1,2,3,<br>4,5 |
| | DE - A - 1 947 635 (EATON YALE & TOWNE)<br>* Totality *<br>& US-A-3 593 956<br>-- | 1,2,3,<br>4,5 |
| A | AT - B - 262 704 (J. HUBER & CIE)<br>* Fig. 2 *<br>& US - A - 3 447 773<br>---- | 1,3 |

**CLASSIFICATION OF THE APPLICATION (Int. Cl.³)**

F 16 K 11/24

**TECHNICAL FIELDS SEARCHED (Int. Cl.³)**

F 16 K 11/00

F 16 K 27/00

F 16 K 31/00

D 06 F 39/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | |
|---|---|---|
| Place of search<br>VIENNA | Date of completion of the search<br>27-01-1982 | Examiner<br>ROUSSARIAN |